Europäisches Patentamt

European Patent Office

Office européen des brevets

(11) Publication number: 0 456 096 A1

# EUROPEAN PATENT APPLICATION

(21) Application number: 91107044.9

(22) Date of filing: 30.04.91

(51) Int. Cl.⁵: B60K 17/36

(30) Priority: 07.05.90 IT 348190

(43) Date of publication of application:
13.11.91 Bulletin 91/46

(84) Designated Contracting States:
AT BE CH DE DK ES FR GB GR IT LI NL SE

(71) Applicant: MENARINI S.p.A.
Via San Donato, 190
I-40127 Bologna(IT)

(72) Inventor: Boccenti, Maurizio
Via S. Donato, 190
40127 Bologna(IT)

(74) Representative: Jorio, Paolo et al
Studio Torta, Via Viotti, 9
I-10121 Torino(IT)

(54) Drive system for a bus particularly for local traffic.

(57) The drive system (4) includes a drive shaft (5) and at least one driven axle (7) with two drive wheels (6). The system is arranged so that the floor of the aisle (2) of the bus is at a height such that no steps are required for access. The shaft (5) extends into the upper part of a housing (11) at one axial end of the axle (7). The axle (7) has a spur reduction unit between the shaft (5) and an intermediate hub (17) comprising two spur gears (13 and 16), a bevel gear comprising a bevel pinion (18) carried by the intermediate hub (17) and a bevel gear (21) of a differential (22), two shafts (23 and 24) extending in opposite directions from the differential (22), and a spur reduction unit for each shaft (23 and 24) between these latter and the hubs (26) of the wheels (6) and comprising two spur gears (27 and 28).

Fig.1

EP 0 456 096 A1

Rank Xerox (UK) Business Services

The present invention relates to a drive system for a bus, particularly for local traffic.

Much research has been undertaken by several bus or axle manufacturers into drive systems which provide for an arrangement of the driven axles such as to allow the floor of the aisle in the bus to be at the lowest possible level and for the aisle itself to have the maximum width. Each company has its own solution as is fully described in Italian Patent Number 1171382 filed on the 13 July 1981 by the company Zahnradfabrik Friedrichshfen AG of the Federal Republic of Germany, granted on 10 June 1987. In every case, it has been found that, because of the bulk of the gearing at the end of the axles, both in terms of axial extent and height, it has not been possible to make use of the maximum width of the aisle and at least one step has been necessary for access thereto. For vehicles intended to carry large loads, in order to divide the load, the driven axle has been coupled to four wheels which has limited the width of the aisle even further and has even necessitated the provision of two steps for access to the bus. It should be borne in mind that the greater the width of the aisle, the greater the space available within the bus, and the lower the level of the floor of the aisle the easier is the access for the users (thinking, for example, of old people, children and the handicapped).

The object of the present invention is to provide a drive system for a bus, particularly for local traffic, which has a conformation such as to allow the maximum possible aisle width and access thereto without any steps.

Further objects and advantages of the present invention will become clear from the following description.

According to the present invention there is provided a drive system for a bus particularly for local traffic, of the type including a drive shaft and at least one first driven axle having two drive wheels, characterised in that the drive shaft extends into an upper point of first housing, defined at a first axial end of the first axle and in that the first axle has a first reduction gear between the drive shaft and an intermediate hub, defined by first and second spur gears, a bevel gear defined by a bevel pinion carried by the intermediate hub and a bevel gear of a differential, two rotatable shafts extending in opposite directions from the differential, and a second reduction gear for each of the shafts between these and first hubs of the drive wheels and defined by a third spur gear carried by a respective said shaft, and a fourth spur gear carried by the corresponding said first hub.

For a better understanding of the present invention, a preferred embodiment is now described, purely by way of non-limitative example, with reference to the attached drawings, in which:

Figure 1 is schematic perspective view of a bus which makes use of a drive system with two driven axles;

Figure 2 is a diagram illustrating the principle of transmission of drive from a drive shaft to first and second axles and from these the wheels of the bus;

Figure 3 is a longitudinal section through the first axle;

Figure 4 is a longitudinal section through part of the second axle of the system of Figure 1; and

Figure 5 is a cross section through respective ends of the first and second axle.

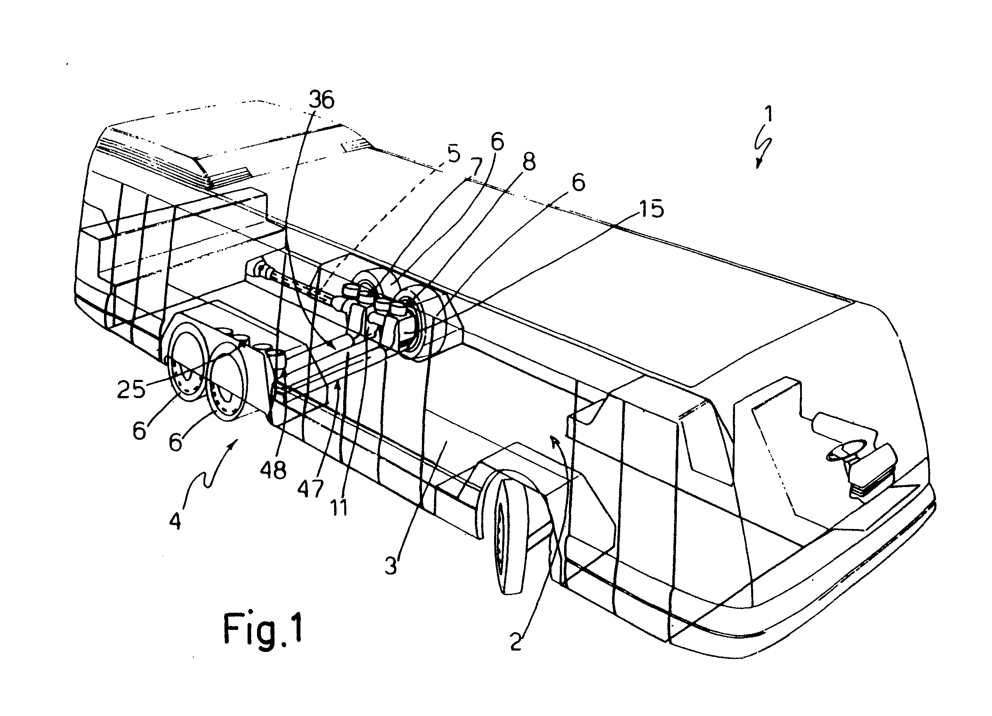

As illustrated in Figure 1, a bus is generally indicated 1 within the interior of which is defined an aisle 2 which has a floor 3 (extending the entire length of the bus 1 and in particular in the rear zone thereof) at a height of about 35 centimetres from the ground, that is, at a height such as not to require the provision of any step in order to facilitate access thereto. Moreover in this bus 1, the aisle 2 has a large width. These two advantages are obtained by the particular conformation of a drive system 4 (fitted in the rear zone of the bus 1) which is arranged to transmit drive from a drive shaft 5 (illustrated in broken outline in Figure 1) to wheels 6 of the bus 1. The drive system 4 illustrated in the appended drawings is of the type with two axles 7 and 8 of which that indicated 8 has the steering wheels 6, but the present invention also relates to a drive system of the type with an axle such as that will be described below.

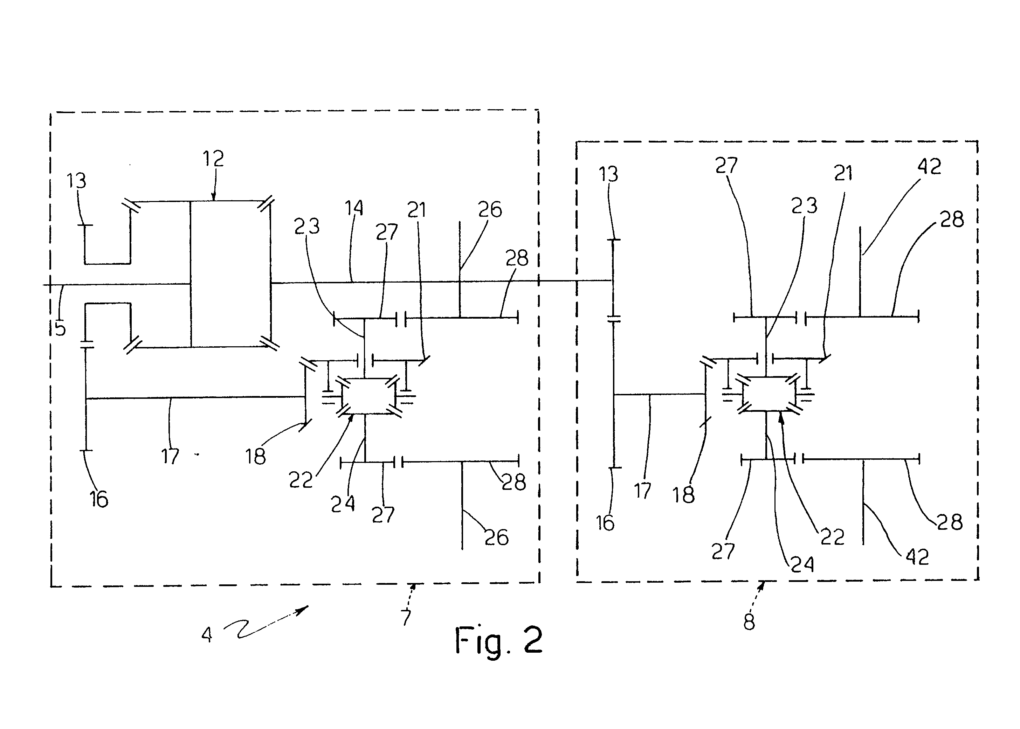

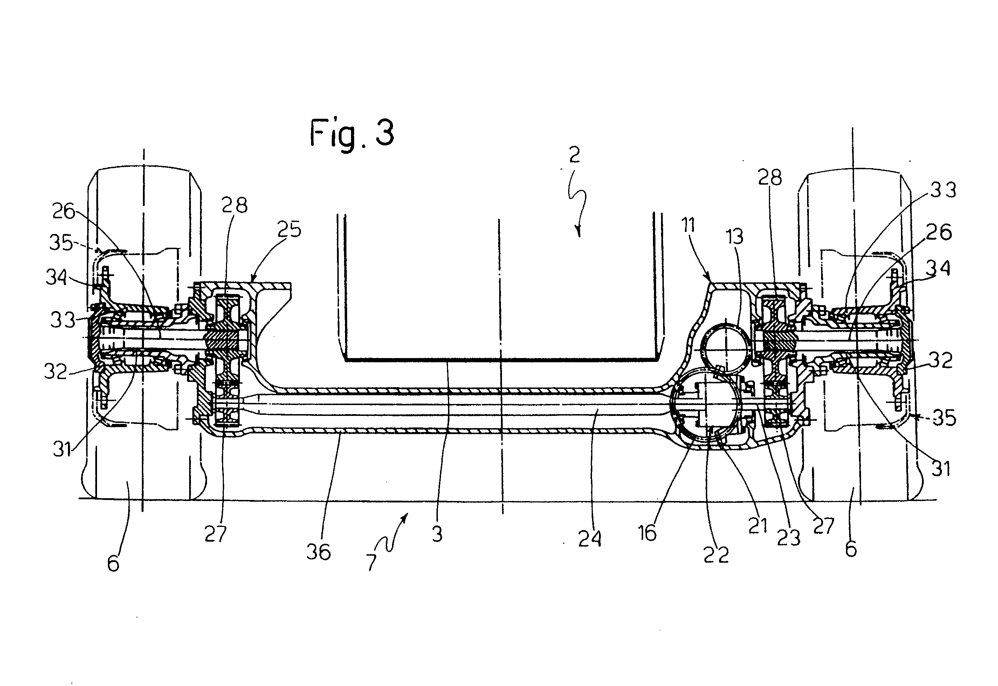

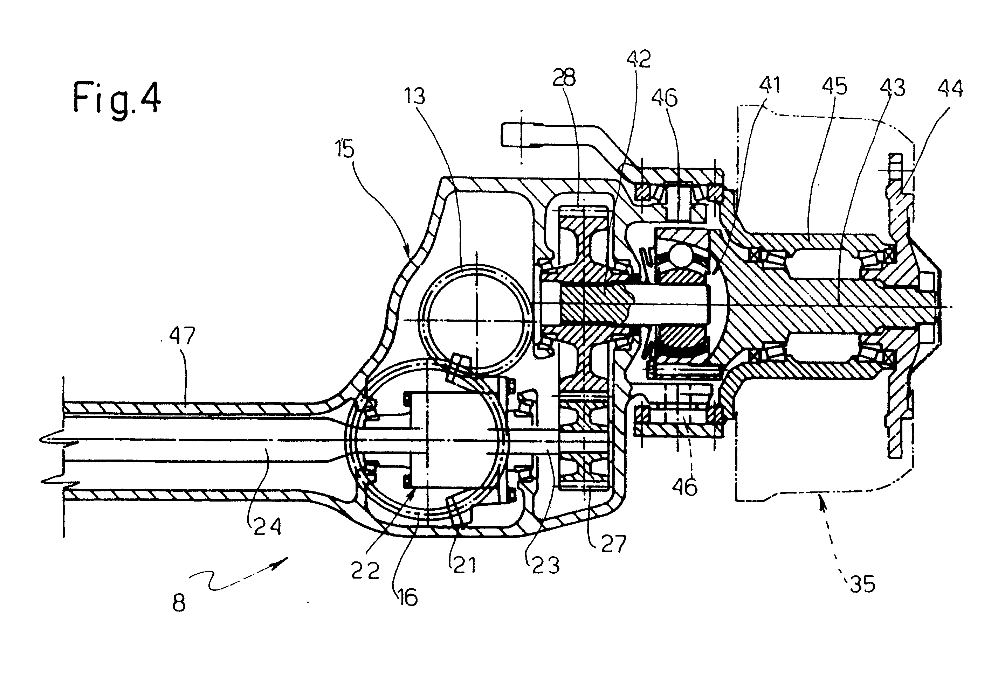

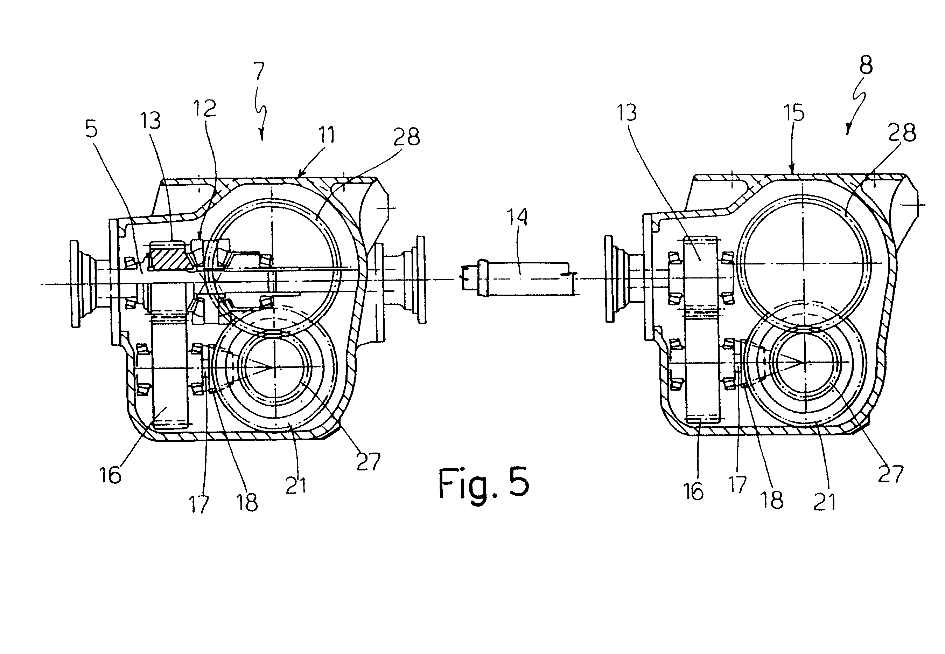

As illustrated in Figure 2, the principle of the drive system 4 provides for one end of the drive shaft 5 to project into a housing 11 (Figures 3 and 5) at a first axial end of the axle 7. Within the housing 11, the drive shaft 5, through a differential divider 12, transmits its drive to a spur gear 13 mounted coaxially and idle on the shaft 5 and to a shaft 14 also coaxial with the shaft 5 and which projects out of the housing 11 and extends into a housing 15 (Figures 4 and 5) at a first axial end of the axle 8.

With reference to Figures 2, 3 and 5, the housing 11 houses a reduction gear unit formed by the meshing of the gear 13 and a second spur gear 16 whose axis is parallel to that of the gear 13 but located at a lower level. The gear 16 is keyed to a hub 17 on which is also keyed a bevel pinion 18 which meshes with a bevel gear 21 of a common differential 22. At this point it should be specified that the bevel gear defined by the pinion 18 and the gear 21 is downstream of the differential divider 12, by which it differs from known systems in which the drive shaft enters the bevel gear directly so that the differential divider is downstream of this bevel gear. The relative disposition of the differential divider 12 and the bevel gear 18, 21 enables the drive system 4 of the invention to have, on the one hand, the drive shaft 5 entering the upper part of the housing 11 and, on the other hand, the drive transmission to the second axle 8 to be directly on axis with the drive shaft 5 with all the advantages which derive therefrom and which will be discussed below.

Two coaxial shafts 23 and 24 extend from the differential 22 in opposite directions and parallel to the axes of the wheels 6. The shaft 23 is of reduced length in that it extends to the wheel 6 which is closer to the housing 11 while the shaft 24 extends into a housing 25 provided at a second axial end of the axle 7. A second reduction gear unit is provided downstream of the differential 22 between the shafts 23 and 24 and the hubs 26 of the wheels 6, and comprises a spur gear 27 fitted respectively onto the shaft 23 and onto the shaft 24 and a spur gear 28 fitted onto the hubs 26.

With reference to Figure 3, starting from the gears 27, the axle 7 has axial ends which are exactly the same and therefore the elements at these ends will be indicated by the same numerals. The hubs 26 are housed within respective fixed sleeves 31 supported rigidly by the respective housings 11 and 25. Each hub 26 has an end flange 32 outside the sleeve 31 fixed by screws to a second sleeve 33 fitted around the sleeve 31 with the interposition of two bearings. The sleeves 33 then have respective annular flanges 34 which by means of screws coaxially supports the rims of the respective wheels 6. A braking device 35 is shown schematically and in broken outline for each wheel 6. It is to be noted, still with reference to Figure 3, that the shaft 24 is housed within a cylindrical housing 36 which interconnects the housings 11 and 25. The shaft 24 is installed eccentrically in the housing 36 and, more particularly, the longitudinal axis of the shaft 24 is slightly above the longitudinal axis of the housing 36.

As illustrated in Figures 2, 4 and 5, the axle 8 is similar to the axle 7 but is differentiated therefrom by the absence of the differential divider 12 and the presence at its two axial ends of respective joints 41 by which the corresponding wheels 6 are made steering wheels. For this reason the elements common to the two axles 7 and 8 will be indicated by the same numerals. A spur gear 13 is fitted directly on to the portion of the shaft 14 within the housing 15, this being different from the arrangement of the axle 7, and defines a reduction unit by meshing with a spur gear 16. Naturally the shaft 14 extends into the upper part of the housing 15. Downstream of the spur reduction unit, the axle 8 is the same as the axle 7 apart from the fact that the gears 28 are keyed to a journal 42 which transmits drive to a hub 43 through the coupling 41. The system which enables the wheels 6 of the axle 8 to be steered will now be described briefly in that this system is of a type known to experts in this field. An annular flange 44 is fixed to one end of the hub 43 for a rotation therewith and by means of screws supports coaxially the rim of the corresponding wheel 6. A sleeve 45 is fitted onto the hub 43 and an annular appendage of the flange 44 with the interposition of two bearings. The sleeve 45 is connected mechanically to the housing 15 by two coaxial steering pins 46. The pins 46 are carried by the housing 15 and allow the sleeve 45 and hence the hub 43 and the corresponding wheel 6 to rotate about the axis of the pins 46 themselves, while at the same time preventing the sleeve 45 from rotating about its own longitudinal axis. Naturally their coupling 41 permits steering of the hub 43, that is its rotation about the axis of the pins 46. The axle 8, like the axle 7, has a cylindrical housing 47 like the housing 36, which houses the shaft 24 eccentrically and which connects the housing 15 to an opposite end housing 48 like the housing 25 of the axle 7. Naturally, in addition to the reduction unit defined by the gears 27 and 28, the housing 48 will also house the steering system defined in the housing 15. The wheels 6 on the axle 8 will also have respective braking devices 35. For buses with a single driven axle, the drive system will include an axle like the axle 7 but not including the differential divider 12, and in which the wheel 13 is keyed directly to the drive shaft 5.

In use, the drive torque on the drive shaft 5 is divided equally by means of the differential divider 12 between the axle 7 and the axle 8. Each axle 7 and 8 first has a spur reduction unit (gears 13 and 16), then a bevel reduction unit (pinion 18 and gear 21), and finally the differential 22 which divides the drive between the two wheels 6 of each axle 7 and 8 through a further reduction unit (gears 27 and 28).

From what has been explained above, the advantages achieved by the present invention will be clear.

In particular, both the construction and assembly of the axles are simplified with the consequent advantages from the point of view of costs. This simplification is due to the fact that the drive shaft 5 enters the housing 11 at an upper part rather than in correspondence with the bevel gear as occurs in current axles. Moreover, for drive systems with the two driven axles, the differential torque divider 12 is disposed upstream of the drive reduction unit. This not only allows the division of torque between the two hubs 17 without any problem, in that the shaft 14 extends from the housing 11 coaxial with the drive shaft 5, but also enables the provision, immediately downstream of the differential divider 12, of a first reduction unit (gears 13 and 16) and makes possible the provision of a second spur reduction unit (gears 27 and 28) downstream of the differential 22. Now, as is known, spur reduction units, even if they include several stages, are considerably smaller than other types of reduction gear units which might be provided as in current axles for the driven wheels. The conformation of the system 4 just described thus allows a considerable reduction in the size of the various housings 11, 25, 15 and 47, both in terms of height and in a horizontal sense, whereby the floor of the aisle 2 maybe lowered to 35 centimetres from the ground and the reduction in size of the gearing may be exploited to increase the width of the aisle 2. The lowering of the level of the aisle 2 is also due to the fact that the conformation of the drive system 4 makes it possible to use smaller diameter wheels 6 and a wheel 6 for each end of the axle in that the division of the load between the two axles is more efficient. A bus may then be constructed which does not require any steps for access to the passageway 2 and with greater space within it so that the number of seats may be increased or comfort for the users may be improved. Finally, it is to be noted that most of the components of the axles 7 and 8 are the same so that, as will be evident, these components may be manufactured on an industrial scale with the consequent reduction in production costs. Naturally, most of the advantages which result in such a low level of the floor as not to require any steps and which results in a greater width of the aisle 2 also apply to buses with a single driven axle.

Finally, it is clear that the drive system 4 described and illustrated may be modified and varied without thereby departing from the protective scope of the present invention.

## Claims

1. A drive system for a bus particularly for local traffic, of the type including a drive shaft (5) and at least one first driven axle (7) having two drive wheels (6), characterised in that the drive shaft (5) extends intoan upper part of a first housing (11), defined at a first axial end of the first axle (7), and in that the first axle (7) has a first reduction gear between the drive shaft (5) and an intermediate hub (17), defined by first and second spur gears (13, 16), a bevel gear defined by a bevel pinion (18) carried by the intermediate hub (17) and a bevel gear (21) of a differential (22), two rotatable shafts (23, 24) extending in opposite directions from the differential (22), and a second reduction gear for each of the shafts (23, 24) between these and first hubs (26) of the drive wheels (6) and defined by a third spur gear (27) carried by a respective said shaft (23, 24) and a fourth spur gear (28) carried by the corresponding said first hub (26).

2. A drive system according to claim 1, characterised in that the first spur gear, the bevel gear, the said differential (22), a first (23) of the said shafts (23, 24), and the said second reduction gear of the first shaft (23) are housed within the said first housing (11).

3. A drive system according to claim 2, characterised in that the said first axle (7) has a second housing (25) at its second axial end which houses the second reduction gear of a second (24) of the said shafts (23, 24).

4. A drive system according to claim 3, characterised in that a third preferably cylindrical housing (36) is located between the first and second housings (11, 25), and is traversed by the said second shaft (24) in an eccentric position relative to the longitudinal axis of the third housing (36) and, more particularly, the longitudinal axis of the said second shaft (24) is parallel but at a higher level than the longitudinal axis of the third housing (36).

5. A drive system according to at least one of the preceding claims, characterised in that it includes a second driven axle (8) with a similar conformation to that of the first axle (7) but having wheels (6) of the steering type; within the first housing (11) upstream of the first reduction gear, is a differential (12) for dividing the drive torque between the drive shaft (5) and the said driven axles (7 and 8).

6. A drive system according to claim 5, characterised in that the differential divider (12) is arranged to divide the drive torque between the first reduction gear of the first axle (7) in which the first spur gear (13) is idle on the drive shaft (5) and a second shaft (14) coaxial with the drive shaft (5) which projects into the upper part of a fourth housing (15) defined at a first axial end of the second axle (8), and on which is fitted the first spur gear (13) of the first reduction unit of the second axle (8).

7. A drive system according to claim 6, characterised in that the fourth spur gears (28) on the second axle (8) are fitted to second hubs (42); a respective steering joint (41) being installed between these latter hubs and third hubs (43) of the drive wheels (6).

8.  A bus provided with a drive system for according to any one of the preceding claims, characterised in that it has an aisle (2) the floor (3) of which is at a height of about 35 centimetres from the ground such that no access steps are required.

Fig.1

Fig. 2

EP 0 456 096 A1

Fig. 3

EP 0 456 096 A1

Fig.4

EP 0 456 096 A1

Fig. 5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-3 860 082  (TESTORE)<br>* whole document *<br>– – – | 1-3 | B 60 K 17/36 |
| A | GB-A-8 965 42  (THE DAIMLER COMPANY)<br>* figure 1 *<br>– – – | 1-4 | |
| A | FR-A-1 595 607  (DAIMLER-BENZ)<br>* figures *<br>– – – | 1,2,5,6 | |
| A | GB-A-8 519 44  (PITTSBURGH CONSOLIDATION COAL)<br>* page 2, lines 54-127; figures 1-6,9 *<br>– – – | 1-3,5-7 | |
| A | US-A-3 862 667  (WOLANSKY)<br>* figures *<br>– – – | 1-5,7 | |
| A | US-A-3 000 456  (CHRISTIE)<br>* figure 2 *<br>– – – – – | 1,5,6 | |

### TECHNICAL FIELDS SEARCHED (Int. Cl.5)

B 60 K

The present search report has been drawn up for all claims

| Place of search | Date of completion of search | Examiner |
|---|---|---|
| Berlin | 07 August 91 | KRIEGER P O |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

& : member of the same patent family, corresponding document